# EUROPEAN PATENT APPLICATION

(11) **EP 2 020 806 A2**
(43) Date of publication of application: **04.02.2009**
(21) Application number: 08104833.2
(22) Date of filing: 22.07.2008
(51) Int. Cl.: H04M 1/02

(54) **Combined mechanism for sliding movement and rotating movement and a portable electronic appliance employing the same**

(30) Priority: 30.07.2007 KR 20070076385
(71) Applicant: P & Tel Inc., Yeongdeungpo-gu Seoul, 150-958 (KR); Lee, Han Sang, Seoul 135-270 (KR)
(72) Inventor: Lee, Han Sang, 135-270, Seoul (KR)
(74) Representative: Gritschneder, Martin

(57) **Abstract**

Disclosed is a combined sliding and rotation mechanism adapted to a device. When the sliding housing (20) enters into a sliding operation mode from a closed condition, the constraint tip of the base swing link escapes from the constraint recess of the sliding housing (20), and the guide protrusion of the base swing link simultaneously moves from a boundary point between the horizontal recess and the slanted recess of the rotation guide recess to a terminal point of the horizontal recess so that the sliding housing (20) is constrained and prevented from rotating. In addition, when the sliding housing (20) enters into a rotation operation mode from the closed condition, the pad of the hinge base slides from a lower end of the rotation sliding opening to an upper end of the rotation sliding opening, the guide protrusion of the base swing link simultaneously slides from a lower end of the slanted recess to an upper end of the slanted recess and allows the sliding housing (20) to rotate relative to the main housing (10), and the constraint tip of the base swing link remains inserted into the constraint recess of the sliding housing (20) during the rotation process so that the sliding housing (20) is not allowed to slide in the longitudinal direction of the main housing (10).

## Description

### BACKGROUND OF THE INVENTION

### 1. Field of the invention

The present invention relates to a movement mechanism for coupling two members so that one of the members can slide and rotate relative to the other, and a portable terminal employing the mechanism so that the sliding housing, on which a display is mounted, can either slide to be opened/closed or rotate 90° relative to the main housing.

### 2. Description of the Prior Art

As generally known in the art, recent portable terminals (e.g. cellular phones) tend to incorporate a function for watching video clips (e.g. video on-demand), television programs (e.g. digital multimedia broadcasting), etc. (hereinafter, simply referred to as a television watching function). The display of cellular phones generally has a vertical length larger than the horizontal length. However, TV screens have a vertical length smaller than the horizontal length, and users are accustomed to TV screens. Therefore, when cellular phones are used to watch TV programs, the display screen is preferably rotated 90° so that the longer side is positioned in the horizontal direction.

Cellular phones come in various types, including a bar type, a flip cover type, a folder type, and a sliding type. Among them, sliding-type cellular phones have recently become predominant in the market due to the highest level of user convenience. Sliding-type cellular phones have a main housing, on which a keypad is arranged, and a sliding housing, on which a screen is arranged, and the sliding housing is adapted to slide up or down relative to the main housing to be closed on or opened from the main housing.

When the rotation function of the sliding housing is to be combined with the sliding opening/closing function, a number of design considerations occur. Compactness, slimness, and user convenience are always crucial factors of cellular phone design. If both functions are supported by separate mechanisms that have little connection with respective functions, the compactness and slimness are likely to be degraded. In addition, considering the user convenience or the operational stability, it is necessary that the sliding housing does not rotate while sliding up/down, and that it does not slide while rotating. The television watching function can be better implemented by a larger display screen. Therefore, it would be very favorable to maximization of the display screen to arrange only the screen on the sliding housing and place all keypads on the main housing. In this case, the main housing must have a larger region in which more keys are to be arranged. This is made possible by increasing the sliding distance of the sliding housing (i.e. it must slide up to a higher level than conventional sliding housings). The same request is made with regard to the rotation movement of the sliding housing. That is, once the sliding housing is rotated 90°, all keys arranged on the main housing must be exposed. Furthermore, if the sliding housing has positional symmetry with regard to the main housing after rotating 90°, aesthetic factors (i.e. symmetry) as well as user convenience can be secured.

### SUMMARY OF THE INVENTION

Accordingly, the present invention has been made to solve the above-mentioned problems occurring in the prior art, and the present invention provides a combined sliding and rotation mechanism, which is a single mechanism capable of satisfying all of the above-mentioned requests efficiently.

The present invention also provides a portable electronic device (e.g. a portable communication terminal, a game machine, a PMP, a compact computer, a portable electronic appliance, etc.) employing the above-mentioned combined sliding and rotation mechanism so that it can conduct sliding and rotation operations in a slim and stable manner, and that the sliding housing is positioned at the highest level after sliding or rotation to maximize the display screen.

In accordance with an aspect of the present invention, there is provided a combined sliding and rotation mechanism adapted to a device having a main housing and a sliding housing coupled to face the main housing so that the mechanism supports the sliding housing to conduct sliding and rotation operations with regard to the main housing. The mechanism includes a main housing having a rotation guide recess and a rotation sliding opening positioned in an upper region of a front surface, the rotation guide recess having a horizontal recess extending a short distance in a horizontal direction (x-axis direction) and a slanted recess elongated obliquely and connected to the horizontal recess to communicate with the horizontal recess, the rotation sliding opening being elongated obliquely adjacent to the rotation guide recess, and the main housing having a sink positioned on a rear surface to comprise the rotation sliding opening; a sliding housing having lateral walls elongated in predetermined positions on a front surface facing the main housing, constraint recesses formed on ends of the lateral walls, and guide rails elongated in a longitudinal direction; a hinge base having a base plate, holders connected to left and right sides of the base plate and coupled to engage with the guide rails and slide, and a pad and an incision hole positioned on a front surface of the base plate, the pad protruding to be inserted into the rotation sliding opening; a base swing link having a plate piece rotatably coupled to a rear surface of the base plate of the hinge base and a guide protrusion protruding upright in a predetermined position on the plate piece, the guide protrusion being inserted into the rotation guide recess via the incision hole of the hinge base, an end of the plate piece functioning as a constraint tip inserted into or released from the constraint recess; a base dummy fixed to the pad of the hinge base from the sink of the main housing across the rotation sliding opening so that the hinge base is fastened in the upper region of the front surface of the main housing; and a main swing link having an end pivotably inserted into a bottom of a sink of the base and an opposite end pivotably inserted into an end of an assembly of the base dummy and the hinge base. According to this construction, when the sliding housing enters into a sliding operation mode in the longitudinal direction (y-axis direction) of the main housing from a closed condition, the constraint tip of the base swing link escapes from the constraint recess of the sliding housing, and the guide protrusion of the base swing link simultaneously moves from a boundary point between the horizontal recess and the slanted recess of the rotation guide recess to a terminal point of the horizontal recess so that the sliding housing is constrained and prevented from rotating. In addition, when the sliding housing enters into a rotation operation mode from the closed condition, the pad of the hinge base slides from a lower end of the rotation sliding opening to an upper end of the rotation sliding opening, the guide protrusion of the base swing link simultaneously slides from a lower end of the slanted recess to an upper end of the slanted recess and allows the sliding housing to rotate relative to the main housing, and the constraint tip of the base swing link remains inserted into the constraint recess of the sliding housing during the rotation process so that the sliding housing is not allowed to slide in the longitudinal direction of the main housing.

Preferably, the mechanism further includes a vertical sliding spring having a first arm fixed to the main housing or to a component integrated with the main housing and a second arm fixed to the sliding housing or to a component integrated with the sliding housing so that, when the sliding housing is in a closed condition or an opened condition with regard to the main housing, the vertical sliding spring supports the sliding housing to maintain the condition, and, when the sliding housing is slid up or down by external force, the vertical sliding spring is compressed and then extended to provide force for pushing up or pulling down the sliding housing to the limit. The vertical sliding spring is preferably a torsion spring.

Preferably, the mechanism further includes a rotation sliding spring having a first arm fixed to the main housing or to a component integrated with the main housing and a second arm fixed to the sliding housing or to a component integrated with the sliding housing so that, when the sliding housing is in a closed condition or a 90°-rotated condition with regard to the main housing, the rotation sliding spring supports the sliding housing to maintain the condition, and, when the sliding housing is being moved by external force to the 90°-rotated condition or the closed condition, the rotation sliding spring is compressed and then extended to provide force for rotating the sliding housing to the limit. The rotation sliding spring is preferably a torsion spring.

The rotation sliding opening is preferably designed to satisfy the following features. According to an aspect, the distance traveled by the pad of the hinge base in the horizontal direction (x-axis direction) when sliding from the lower end of the rotation sliding opening to the upper end is preferably equal to the distance traveled by the sliding housing in such a manner that a longitudinal center line of the sliding housing is positioned on a transverse center line of the main housing. According to another aspect, the distance traveled by the pad of the hinge base in the longitudinal direction (y-axis direction) of the main housing when sliding from the lower end of the rotation sliding opening to the upper end is preferably equal to the distance traveled by the sliding housing in such a manner that an upper surface of the sliding housing is flush with an upper surface of the main housing after the sliding housing has rotated 90°. According to another aspect, the rotation sliding opening preferably has a slanted angle and a length corresponding to a distance traveled by the pad of the hinge base in the transverse direction (horizontal direction or x-axis direction) and the longitudinal direction (y-axis direction) of the main housing when the sliding housing rotates 90°. According to another aspect, after rotating 90°, the sliding housing preferably has horizontal symmetry with reference to the main housing, and the upper surface of the sliding housing is flush with the upper surface of the main housing.

Preferably, the slanted recess of the rotation guide recess constrains the guide protrusion of the base swing link while the sliding housing rotates 90° so that the sliding housing is prevented from sliding in the longitudinal direction. Preferably, the slanted recess extends a predetermined length in a diagonal direction while being curved, and the length and curved trajectory of the slanted recess are determined based on movement trajectories of the main swing link and the base dummy.

Preferably, slots are formed on the pad of the hinge base and the base dummy abutting the pad, respectively, so that an FPCB can extend through to electrically connect the sliding housing to the main housing.

Preferably, the sliding housing has a sliding housing body having a rectangular sink formed on a front surface, and a rectangular sliding plate having a width slightly smaller than a width of the sink, step-shaped guide rails being positioned along both lateral surfaces of the sliding plate, the sliding plate being fixed within the sink to provide sliding recesses elongated between the sliding plate and both lateral walls of the sink.

Preferably, the main housing has a guiding plate, the rotation guide recess being formed on the guiding plate, the rotation sliding opening being formed adjacent to the rotation guide recess, and a main housing body for receiving the guiding plate to be integrally coupled to the guiding plate.

According to another aspect of the present invention, there is provided a portable electronic device, such as a portable communication terminal, a game machine, a PMP, a compact computer, a portable electronic appliance, etc., employing one of the combined sliding and rotation mechanisms described above so that a sliding operation mode and a rotation operation mode can be conducted selectively. The portable electronic device has a display screen arranged on the sliding housing and keys arranged on the main housing. Preferably, all keys of the portable electronic device are arranged on the main housing only, and the display screen is sized to occupy the majority of the front surface of the sliding housing.

The present invention is advantageous in that, by employing a single combined mechanism, the sliding housing can either slide or rotate relative to the main housing. In addition, when the sliding housing is conducting one of the operation modes, the other operation mode is not allowed at all. This guarantees that each operation mode can be conducted stably.

When the present invention is applied to a cellular phone, the sliding housing can not only slide a larger distance, but can also be positioned at the highest level possible after 90° rotation. This makes it possible to arrange all necessary keys on the main housing and install only a display screen on the sliding housing. The resulting large display screen is favorable to cellular phones employing a TV watching function. After rotating 90°, the sliding housing is positioned in a T-shaped configuration together with the main housing (i.e. it is symmetric in the horizontal direction). In addition, the balance of weight provided by the main housing enables the user to grasp it and watch TV conveniently.

### BRIEF DESCRIPTION OF THE DRAWINGS

The above and other objects, features and advantages of the present invention will be more apparent from the following detailed description taken in conjunction with the accompanying drawings, in which:

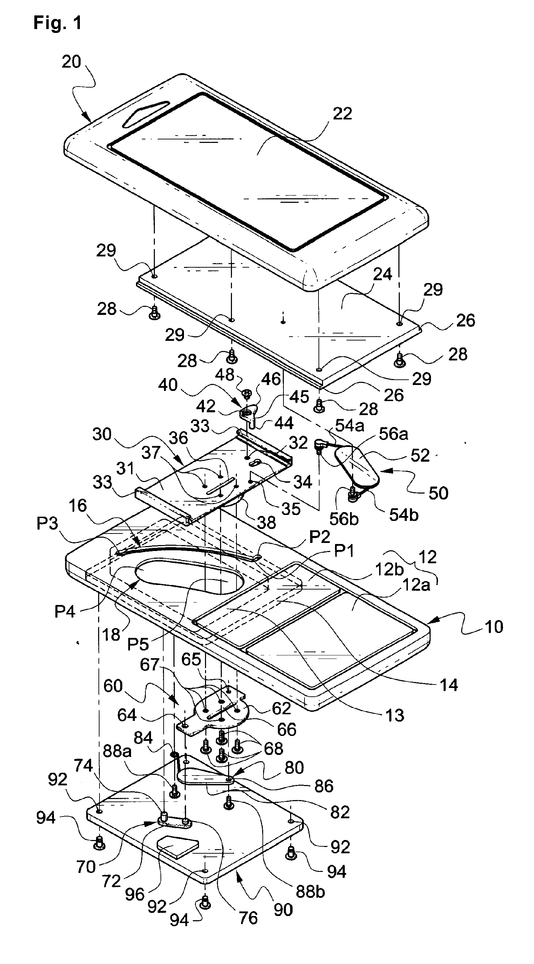

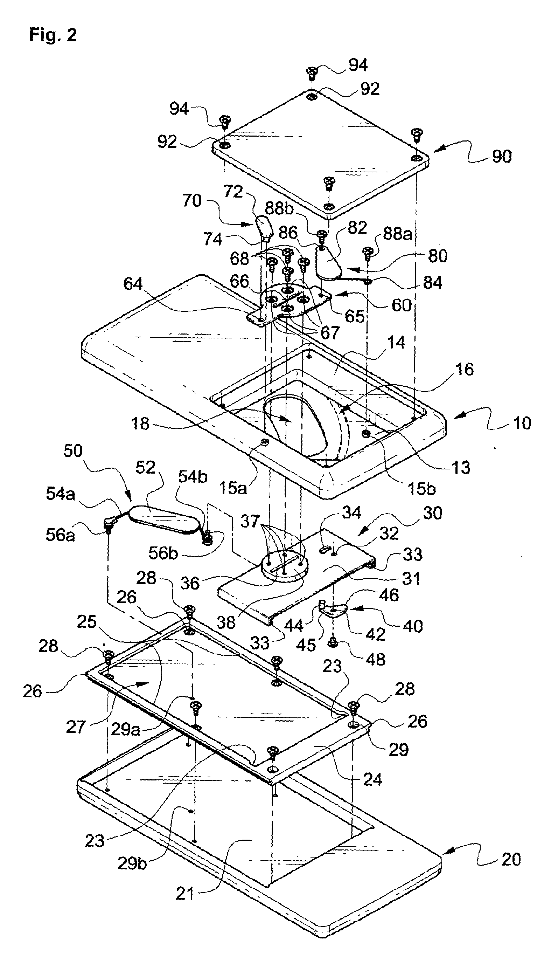

FIGs. 1 and 2 are exploded perspective views of a portable terminal employing a combined sliding and rotation mechanism according to an exemplary embodiment of the present invention, when viewed at different angles;
FIGs. 3 and 4 are top and perspective views showing respective steps of a sliding operation of the portable terminal shown in FIG. 1; and
FIGs. 5, 6, and 7 are a top view, a perspective view, and a bottom perspective view showing respective steps of a rotation operation of the portable terminal shown in FIG. 1.

### DETAILED DESCRIPTION OF THE EXEMPLARY EMBODIMENTS

Hereinafter, an exemplary embodiment of the present invention will be described with reference to the accompanying drawings. In the following description and drawings, the same reference numerals are used to designate the same or similar components, and so repetition of the description on the same or similar components will be omitted.

The main housing 10 has a keypad arranged in regions 12a and 12b of the front surface, which are exposed when the sliding housing 20 is slid up, and a rotation guide recess 16 and a rotation sliding opening 18 formed on the upper non-exposed region. The keypad region 12a contains numeric and character keys (not shown), which would be positioned on the body of a conventional cellular phone. The upper keypad region 12b contains various function keys (e.g. function keys related to menus, confirmation, call, termination, cancelation, pop-ups, and messages), which would be arranged on the sliding housing 20 of a conventional cellular phone. The area of the display region 22 of the sliding housing 20 is maximized by arranging the function keys on the main housing 10.

The rotation sliding opening 18 has predetermined width and length, and extends along a straight line slanted leftward (e.g. 30°) relative to the longitudinal direction of the main housing 10. The width of the opening 18 is determined so that the circular pad 38 of the hinge base 30 (described later) can be inserted and slid therein, and the length thereof is determined to be identical to the distance traveled by the circular pad 38 of the hinge base 30 while the sliding housing 20 rotates 90°.

The rotation guide recess 16 includes a horizontal recess extending a short distance in the horizontal direction and a slanted recess elongated in the diagonal direction and curved, and both recesses are connected to and communicate with each other. The slanted recess is slanted leftward more than the rotation sliding opening 18, and is slightly curved along the trajectory of the guide protrusion 44 of the base swing link 40 (described later) when the sliding housing 20 rotates. The width of the slanted recess is determined so that the guide protrusion 44 can be inserted and moved therein, and the length thereof is determined to be identical to the distance traveled by the guide protrusion 44 when the sliding housing 20 rotates 90°. The length and curved trajectory of the slanted recess of the rotation guide recess 16 are preferably determined to harmonize with the movement trajectory of the main swing link 70 and the base dummy 60 so that smooth sliding and 90° rotation are guaranteed correctly.

Two-staged sinks are formed on the rear surface of the non-exposed region. The first sink 13 includes the rotation sliding opening 18, and is adapted to receive a vertical sliding spring 50, a base dummy 60, and a main swing link 70. The second sink is formed on the periphery of the first sink 13 to receiver a rear cover 90 for covering the first cover 13. The first sink 13 has a convex portion, which is provided with two screw-coupling holes 15a and 15b, formed on a portion of the bottom near the middle lower portion of the right wall while being slightly spaced from the top left corner.

The main housing may be an assembly of a guiding plate, which has a rotation guide recess 16 and a rotation sliding opening formed adjacent to the rotation guide recess 16, and a main housing body for receiving the guiding plate to be integrally coupled to the guiding plate. Alternatively, both members may originally constitute the main housing integrally.

The base dummy 60 is a plate having an approximately circulate center portion 62 and long and short wings extending from the center portion 62 in opposite directions. The center portion 62 has a slot 66 formed at the center so that an FPCB (not shown) can extend through, and a number of screw-coupling holes 67 formed around the slot 66. Both wings are provided with screw-coupling holes 64 and 65, respectively. First and second protrusions 74 and 76 stand upright from both ends of the body 72 of the main swing link 70, and are inserted into the screw-coupling hole 15a and into the screw-coupling hole 64 formed on one wing of the base dummy 60, respectively.

The rotation sliding spring 80 plays the following role: when the sliding housing 20 is in a closed condition or a 90°-rotated condition with regard to the main housing 10, the rotation sliding spring 80 supports the sliding housing 20 to maintain the same condition. When the sliding housing 20 is being moved by external force to the 90°-rotated condition or the closed condition, the rotation sliding spring 80 is compressed and then extended to provide force that rotates the sliding housing to the end. In order to play this role, one arm of the rotation sliding spring 80 is fixed to the main housing 10 or to a component integrated with it, and the other arm is fixed to the sliding housing 20 or to a component integrated with it. In the illustrated example, ends of both arms 82 and 84 of the rotation sliding spring 80 are coupled to the screw-coupling hole 15a and to the screw-coupling hole 65 formed on the other wing of the base dummy 60 by screws 88a and 88b, respectively. As such, the rotation sliding spring 80 is coupled to one side of the base dummy 60, and the main swing link 70 is coupled to the other side.

The main swing link 70 is coupled not by a screw, but in a simple fitting type, so that it can rotate relative to the base dummy 60. The rear cover 90 has a protruding pad 96 formed in a region facing the main swing link 70 so that, when the rear cover 90 is fixed to the main housing 10 by inserting screws 94 into a number of coupling holes 92, the protruding pad 96 prevents the main swing link 70 from escaping.

A display unit 22 is arranged on the front surface of the sliding housing 20. A conventional cellular phone would have various functions keys arranged in a separate region below the display unit 22 on the front surface of the sliding housing 20. This type of design reduces the size of the display unit 22, and is not favorable to the TV watching function. Therefore, the sliding housing 20 preferably has only a display unit 22 on the front surface. The sliding housing 20 has a rectangular sink 21 formed on the rear surface and elongated from the bottom to approximately 3/4 of the height. The sliding plate 24 is fixed into the sink 21 after fitting the hinge base holder 33 to the guide rails 26 to couple it to the hinge base 30. The width of the sliding plate 24 is slightly smaller than that of the sink 21 to secure sliding recesses 27-1, which are elongated in the longitudinal direction between both lateral surfaces of the sliding plate 24 and both lateral walls of the sink 21. The sliding plate 24 has a rectangular sink 27 formed on the outer surface, which faces the hinge base 30. Constraint recesses 23 are formed on the upper ends of the left and right lateral walls 25 of the rectangular sink 27, respectively, to constrain the constraint tip 46 of the base swing link 40. The sliding plate 24 has a number of coupling holes 29 for coupling by screws 28. The sliding plate 24 has guide rails 26 formed on both lateral surfaces in a step shape, respectively.

The sliding housing 20 may be the assembly of the sliding plate 24 and the sliding housing body. Alternatively, both members may originally constitute an integral unit.

The hinge base 30 has a base plate 31 and hinge base holders 33 positioned on both lateral edges of the base plate 31, respectively. The hinge base holders 33 extend straight from both edges up to a height enough to receive the guide rails 26, and bend at 90° toward each other. The sliding plate 24 is fixed to the sink 21 of the body of the sliding housing 20 while the hinge base holders 33 engage with the guide rails 26 so that the hinge base 30 is coupled to slide while facing the sliding plate 24. By providing the sliding recesses 27-1 and slidably coupling the hinge base holders 33 and the guide rails 26 in this manner, the sliding housing 20 can slide up or down in the longitudinal direction (vertical direction) relative to the main housing 10.

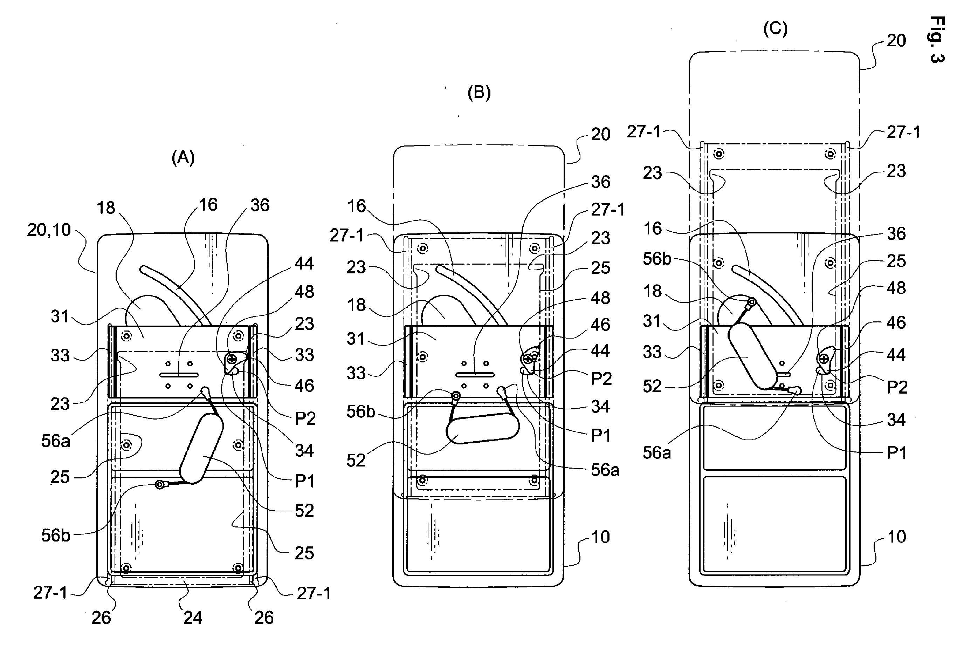

A circular pad 38 is arranged in a predetermined position on the upper surface of the base plate 31 of the hinge base 30, and has a shape complementary to that of the center portion 62 of the base dummy 60. The circular pad 38 has a diameter substantially identical to the width of the rotation sliding opening 18 so that the circular pad 38 can be received in the rotation sliding opening 18 and slide up/down in the longitudinal direction of the opening 18. The circular pad 38 has a slot 36 formed at the center so that an FPCB (not shown) can extend through, and a number of coupling holes 37 formed around the slot 36. The center portion 62 of the base dummy 60 is screw-coupled to the circular pad 38 by a screw 68 so that the hinge base 30 is fixed to the front surface of the main housing 10. The hinge base 30 is arranged at such a height that, when the sliding housing 20 is fully slid up (refer to (C) of FIG. 3), the bottom line of the hinge base 30 is flush with or slightly higher than that of the sliding housing 20. Furthermore, the hinge base 30 is slidably coupled to the guide rails 26 of the sliding plate 24 so that the main housing 10 and the sliding housing 20 are slidably coupled to each other.

A space of a predetermined height is defined between the bottom surface of the hinge base 30 and the bottom surface of the rectangular sink 27 of the sliding plate 24 so that the base swing link 40 is installed in the space. The base swing link 40 includes a plate piece 45 bent approximately at a right angle, which has a coupling hole 42 formed at the center. One end of the plate piece is rounded to function as a constraint tip 46, and the opposite end thereof has a guide protrusion 44 standing upright. A screw 48 is inserted into the coupling hole 42 and fastened to the coupling hole 32 formed on the base plate 31 so that the base swing link 40 is mounted on the hinge base 30. The guide protrusion 44 is inserted into the rotation guide recess 16 via an incision hole 34, which is formed on the base plate 31 to allow the guide protrusion 44 to rotate.

The vertical sliding spring 50 includes a connection member 52 and torsion springs coupled to both ends of it. This structure guarantees a larger length of the vertical sliding spring 50 when extended than when it includes only two torsion springs connected to each other. Therefore, the large distance traveled by the sliding housing 20 when sliding upward can be properly handled. One arm 54a of the vertical sliding spring 50 is fixed to the coupling holes 29a and 29b formed on the sliding plate 24 and the sliding housing 20, respectively, by a screw 56a. The other arm 54b of the vertical sliding spring 50 is fixed to the coupling hole 35 formed on the hinge base 30, which is integral with the main housing 10, by a screw 56b. This coupling guarantees that, when the sliding housing 20 is in a closed condition or an opened condition with regard to the main housing 10, the vertical sliding spring 50 supports the sliding housing 20 to maintain the same condition. In addition, when the sliding housing 20 is being slid up or down by external force, the vertical sliding spring 50 is compressed and, after exceeding the critical point, is extended to provide force that pushes up or pulls down the sliding housing to the end.

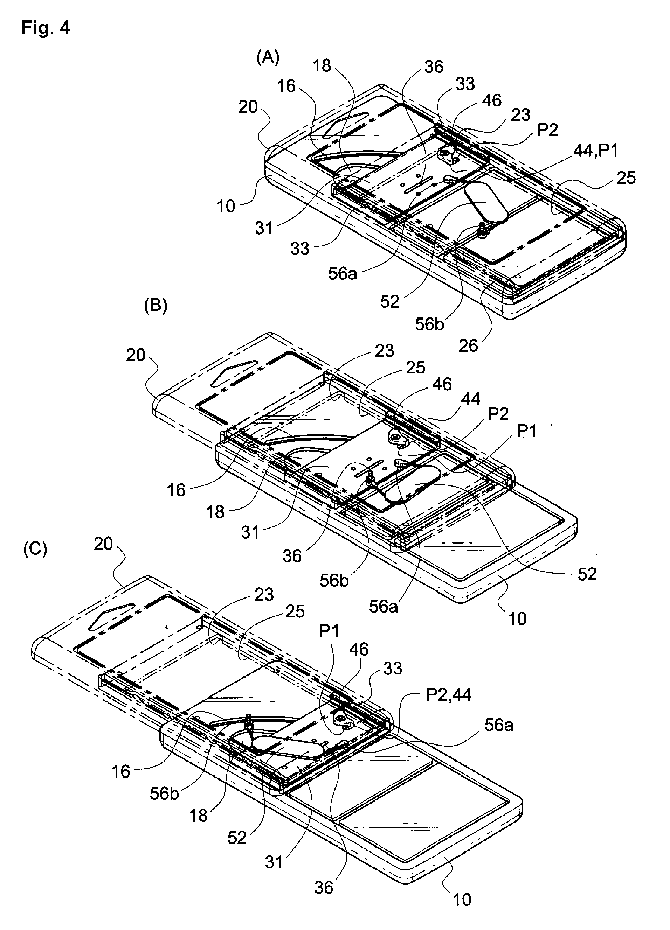

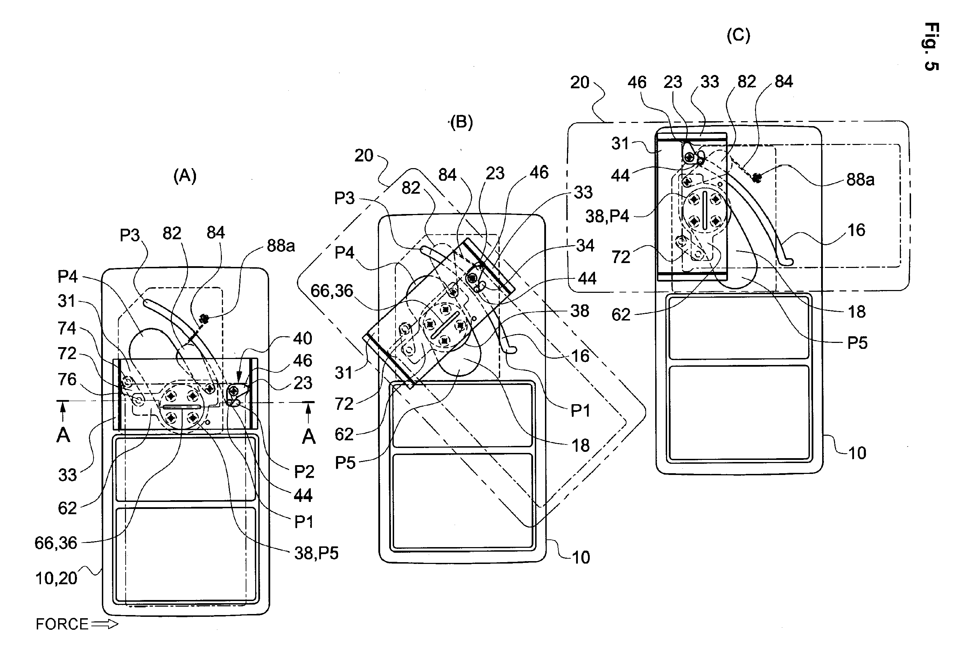

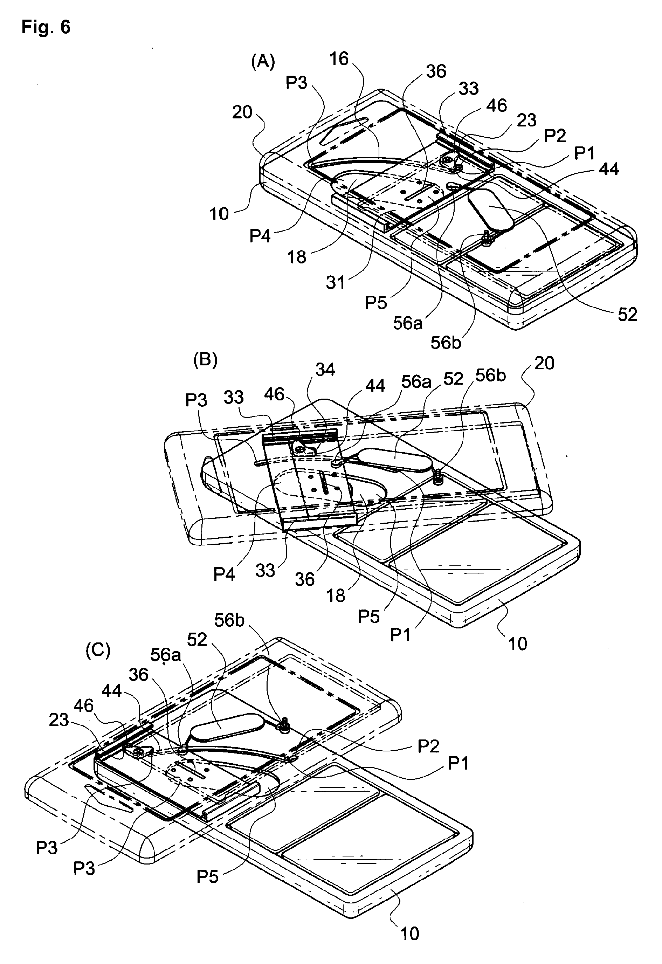

The operation of the terminal, which has the above-mentioned construction, will now be described. The terminal provides two operation modes. In the first mode (sliding mode), the sliding housing 20 slides up or down in the longitudinal direction of the main housing 10, as shown in FIG. 3 or 4. In the second mode (rotation mode), the sliding housing 20 either rotates 90° relative to the main housing 10 to be positioned in a T-shaped configuration or rotates in the opposite direction to return to the original position, as shown in FIG. 5-7.

When the sliding housing 20 is completely closed on the main housing 10 (closed condition) as shown in (A) of FIG. 3, the sliding housing 20 is allowed to either slide up or rotate. However, once one of the sliding-up and rotation operation modes is selected, only the selected operation mode is allowed, and the other mode is not allowed.

The sliding operation mode will now be described with reference to FIGs. 3 and 4. When the sliding housing 20 is completely closed on the main housing 10 as shown in (A) of FIG. 3 or 4, the constraint tip 46 of the base swing link 40 remains inserted into the constraint recess 23 of the sliding plate 24. The guide protrusion 44 of the base swing link 40 is in the first position P1 within the rotation guide recess 16. If the user applies force and pushes up the sliding housing 20, it begins to slide up. Then, the constraint tip 46 of the base swing link 40, which has been constrained in the constraint recess 23, is forced to ascend to the lateral wall 25 of the sliding plate 24 along the slanted wall of the constraint recess 23. The base swing link 40 rotates a predetermined angle about the shaft 48 while the constraint tip 46 is ascending to the lateral wall 25. As a result, the guide protrusion 44 moves from the first position P1 on the lower end of the rotation guide recess 16 to the second position P2 (refer to (B) of FIG. 3 or 4). When the sliding housing 20 is pushed upward by a predetermined distance, it moves through a point at which the distance between the end points of both arms 54a and 54b of the vertical sliding spring 50 is the smallest. After moving past the point, the vertical sliding spring 50, which has been compressed to the greatest extent, is extended and exerts elastic force so that, even if the user does not push the sliding housing 20 any further, it is pushed to the highest level as shown in (C) of FIG. 3 or 4.

When the sliding housing 20 has begun sliding up in the longitudinal direction of the main housing 10 and moves past the threshold (i.e. right after the constraint tip 46 of the base swing link 40 has ascended to the lateral wall 25 of the sliding plate 24), the sliding housing 20 is allowed to continuously slide up, but is constrained so that no rotation is allowed. This is because a rotation movement of the sliding housing 20 in any condition requires that the guide protrusion 44 is allowed to move along the slanted bent portion of the rotation guide recess 16. At point P2 within the rotation guide recess 16, the guide protrusion 44 has no access to the recess in the 10:30 direction, and the above-mentioned movement of the guide protrusion 44 is not allowed.

By pulling down the sliding housing 20, which is in the opened condition (i.e. it has been slid up) as shown in (C) of FIG. 3 or 4, it returns to the closed condition (i.e. it is slid down) as shown in (A) of FIG. 3 or 4. The guide protrusion 44 then recedes from position P2 to position P1 in the horizontal direction. It is not until the sliding housing 20 returns to the closed condition through such receding of the guide protrusion 44 to position P1 that rotation is allowed in the manner described below.

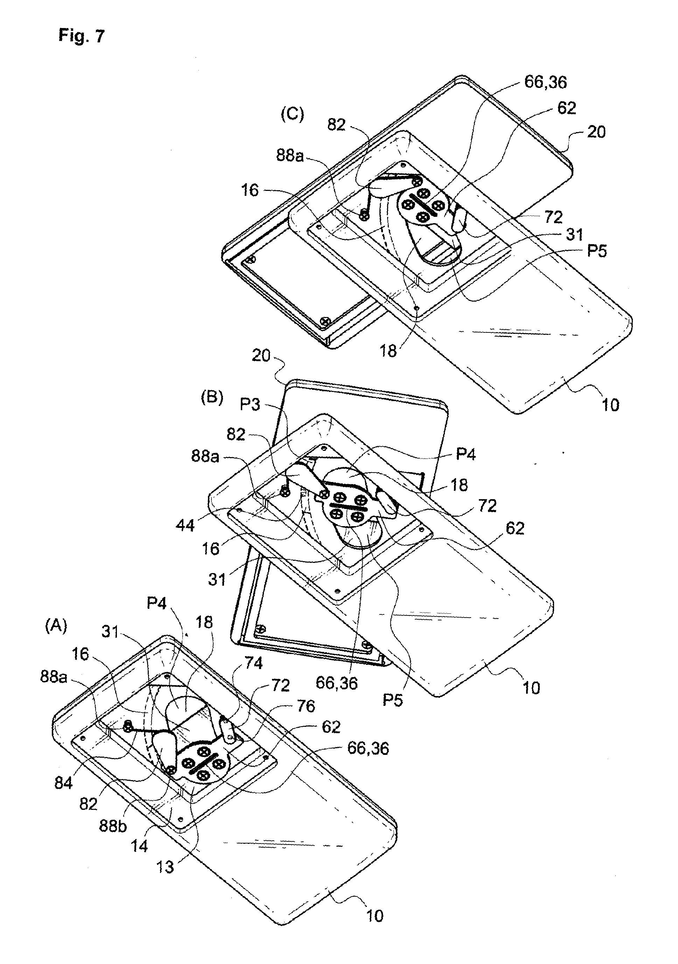

The rotation operation mode will now be described with reference to FIGs. 5-7. The rear cover 90 is omitted for better understanding in FIG. 7. Rotation of the sliding housing 20 can begin only in the closed condition (as shown in (A) of FIGS. 3-7). If the user grasps the main housing 10 and applies force to the lower lateral surface of the sliding housing 20, the sliding housing 20 rotates counterclockwise as shown in (B) of FIGs. 5-7. The sliding housing 20 finally stops and is prevented from rotating after it has rotated 90° as shown in (C) of FIGs. 5-7. If the user applies force to the sliding housing 20, which has rotated 90°, in the opposite direction, it returns to the closed condition shown in (A) of FIGs. 5-7.

In the 90°-rotated condition, the top line (more specifically, the right lateral line) of the sliding housing 20 is substantially flush with the top line of the main housing 10. In addition, the left and right halves of the sliding housing 20 have the same length with reference to a line vertically bifurcating the main housing 10 (i.e. the left and right halves are symmetric). In other words, the main and sliding housings 10 and 20 are positioned in a T-shaped configuration and are symmetric in the horizontal direction. The rotation sliding opening 18 needs to have a length enough to guarantee that the sliding housing 20 can ascend to the desired height after rotating 90°.

The rotation operation mode will be described in more detail. If force is applied to the sliding housing 20, which is in a closed condition as shown in (A) of FIGs. 5-7, along the arrow, the circular pad 38 starts from position P5 and slides toward position P4 along the rotation sliding opening 18. As a result, the sliding housing 20 rotates. During this rotation process, the guide protrusion 44 of the base swing link 40 starts from position P1 within the rotation guide recess 16 and moves toward position P3 along the curved rotation guide recess 16. During the rotation process, the angle between both arms 82 and 84 of the rotation sliding spring 80 is largest in the closed condition, and the angle gradually decreases until the ends of both arms 82 and 84 are at the same level in the horizontal direction as shown in (B) of FIGs. 5-7 (the spring 80 is then compressed to the greatest extent). The angle between both arms 82 and 84 of the rotation sliding spring 80 is increased again by its own elastic force, even if the user applies no more force, and the sliding housing 20 is pushed until it is rotated 90°.

The main swing link 70 also undergoes a condition change during the rotation process. In the closed condition, an obtuse angle (about 120°) is created between the longitudinal direction of the main swing link 70 and the longitudinal direction of the base dummy 60 (i.e. horizontal direction). The angle decreases gradually as the sliding housing 20 rotates, and becomes smallest when the rotation sliding spring 80 moves slightly past the point, at which both arms 82 and 84 of the rotation sliding spring 80 are positioned side by side in the horizontal direction. The angle then increases until the sliding housing 20 completes the 90° rotation (the angle is finally about 45°). As such, the main swing link 70 provides the base dummy 60 and the circular pad 38 of the hinge base 30, which rotate in the rotation operation mode, with movement reference points so that the circular pad 38 of the hinge base 80 can slide linearly along the straight rotation sliding opening 18.

After completing the 90° rotation (condition shown in (C) of FIGs. 5-7), the guide protrusion 44 reaches the upper end of the rotation guide recess 16 (position P3), and the circular pad 38 reaches the upper end of the rotation sliding opening 18 (position P4), from which it cannot move any more. The 90°-rotated condition is stably supported by the elastic force from the rotation sliding spring 80. If the user applies external force exceeding the elastic force from the rotation sliding spring 80 to the sliding housing 20, it rotates in the opposite direction and returns to the closed condition (shown in (A) of FIGs. 5-7).

Once a rotation operation is started, the guide protrusion 44 of the base swing link slides from position P1 to position P3, but it can never move to position P2. This is because the constraint tip 46 of the base swing link 40 is forced and constrained within the constraint recess 23 throughout the entire rotation operation. The sliding housing 20 cannot slide in the longitudinal direction of the main housing 10 as long as the constraint 46 is constrained in the constraint recess 23. The guide protrusion 44 of the base swing link 40 moves while being always constrained in the slanted recess of the rotation guide recess 16 during the sliding housing 20 rotates to 90°. This constraint prevents the sliding housing 20 from sliding in the longitudinal direction of the main housing 10 (y-axis direction). In other words, the sliding housing 20 is constrained and prevented from sliding in the longitudinal direction of the main housing 10 once it has started rotating relative to the main housing 10. It is not until the guide protrusion 44 returns to position P1 that the sliding is allowed.

As mentioned above, any of the sliding and rotation operations can be selected in the closed condition, and both operation modes are interlocked with each other and are conducted by the single combined mechanism described above. Particularly, the sliding operation requires rotation of the base swing link 40 so that the constraint tip 46 escapes from the constraint recess 23, and the rotated condition of the swing link 40 prevents the sliding housing 20 from rotating. Furthermore, the rotation operation requires harmonized movements of respective components in the following manner: the base swing link 40 is not allowed to rotate; the guide protrusion 44 of the base swing link 40 slides along the rotation guide recess 16; the circular pad 38 of the hinge base 30 slides along the rotation sliding opening 18; the main swing link 70 moves; and the rotation sliding spring 80 is compressed and extended. This guarantees that the sliding housing 20 can rotate 90° and return to the original position. Rotation of the sliding housing 20 requires that the base swing link 40 is not allowed to rotate. As a result, the constraint tip 46 cannot escape from the constraint recess 23, and the sliding housing 20 is prevented from sliding.

The sliding-up or sliding-down operation of the sliding housing 20 is not necessary based on force from the vertical sliding spring 50, but may also be completely by force from the user alone. This means that the vertical sliding spring 50 may be omitted. Similarly, the rotation operation of the sliding housing 20 may be conducted by force from the user alone, i.e. without force from the rotation sliding spring 80, which may then be omitted. However, both springs 50 and 80 support the sliding housing 20 to maintain its current condition whatever it may be, which means that, if both springs 50 and 80 are omitted, separate means are preferably provided to play this role.

During an actual design process, the length of the main swing link 70, the slanted angle and length of the rotation sliding opening 18, the slanted angle, curvature, length, and the shape of the end of the rotation guide recess 16, etc. can be varied depending on operation requirements. The sliding and rotation operations are interlocked with each other by the value of these factors. In order to guarantee that the sliding housing 20 has horizontal symmetry with regard to the main housing 10 after rotation 90°, the distance to be traveled by the sliding housing 20 must be considered when designing the rotation sliding opening 18. The slanted angle and length of the rotation sliding opening 18 correspond to the distance traveled by the pad 38 of the hinge base 30 in the transverse direction (horizontal direction or x-axis direction) and the longitudinal direction (y-axis direction) of the main housing 10 when the sliding housing 20 rotates 90°.

In order to guarantee that the sliding housing 20 has horizontal symmetry with regard to the main housing 10 after rotating 90°, the distance traveled by the pad 38 of the hinge base 30 in the horizontal direction (in the transverse direction of the main housing 10 or in the x-axis direction) when it slides from the lower end of the rotation sliding opening 18 to its upper end is determined during the actual design process to be equal to the distance traveled by the sliding housing 20 until the longitudinal center line of the sliding housing 20 reaches the transverse center line of the main housing 10.

In addition, the sliding housing 20 must travel a predetermined distance in the longitudinal direction of the main housing 10 (y-axis direction) so that the upper surface of the sliding housing 20, which has rotated 90°, is flush with the upper surface of the main housing 10 (refer to (C) of FIG. 5). The distance is determined to be identical to the difference between the y coordinate value of the center point of the pad 38 of the hinge base 30 in the closed condition (shown in (A) of FIG. 5) and that in the rotated condition (shown in (C) of FIG. 5).

By reflecting both design factors, the sliding housing 20 is horizontally symmetric with reference to the sliding housing 20 after rotating 90°, and its upper surface becomes flush with the upper surface of the main housing 10.

Those skilled in the art can understand that the above-mentioned components, which have been assumed as separate components that are coupled to the main housing 10 or the sliding housing 20, may be designed as an integral unit with it.

Furthermore, although the combined sliding and rotation mechanism according to the present invention has been described based on an assumption that it is applied to a cellular phone, the present invention is not limited to that assumption, and is applicable to any type of devices requiring the above-mentioned two operation modes, such as PDAs, smart phones, PMPs, game machines, compact PCs, or other devices that may be developed in the future.

Although an exemplary embodiment of the present invention has been described for illustrative purposes, those skilled in the art will appreciate that various modifications, additions and substitutions are possible, without departing from the scope and spirit of the invention as disclosed in the accompanying claims.

## Claims

1. A combined sliding and rotation mechanism adapted to a device having a main housing and a sliding housing coupled to face the main housing so that the mechanism supports the sliding housing to conduct sliding and rotation operations with regard to the main housing, the mechanism comprising:
a main housing having a rotation guide recess and a rotation sliding opening positioned in an upper region of a front surface, the rotation guide recess having a horizontal recess extending a short distance in a horizontal direction (x-axis direction) and a slanted recess elongated obliquely and connected to the horizontal recess to communicate with the horizontal recess, the rotation sliding opening being elongated obliquely adjacent to the rotation guide recess, and the main housing having a sink positioned on a rear surface to comprise the rotation sliding opening;
a sliding housing having lateral walls elongated in predetermined positions on a front surface facing the main housing, constraint recesses formed on ends of the lateral walls, and guide rails elongated in a longitudinal direction;
a hinge base having a base plate, holders connected to left and right sides of the base plate and coupled to engage with the guide rails and slide, and a pad and an incision hole positioned on a front surface of the base plate, the pad protruding to be inserted into the rotation sliding opening;
a base swing link having a plate piece rotatably coupled to a rear surface of the base plate of the hinge base and a guide protrusion protruding upright in a predetermined position on the plate piece, the guide protrusion being inserted into the rotation guide recess via the incision hole of the hinge base, an end of the plate piece functioning as a constraint tip inserted into or released from the constraint recess;
a base dummy fixed to the pad of the hinge base from the sink of the main housing across the rotation sliding opening so that the hinge base is fastened in the upper region of the front surface of the main housing; and
a main swing link having an end pivotably inserted into a bottom of a sink of the base and an opposite end pivotably inserted into an end of an assembly of the base dummy and the hinge base, wherein
when the sliding housing enters into a sliding operation mode in the longitudinal direction (y-axis direction) of the main housing from a closed condition, the constraint tip of the base swing link escapes from the constraint recess of the sliding housing, and the guide protrusion of the base swing link simultaneously moves from a boundary point between the horizontal recess and the slanted recess of the rotation guide recess to a terminal point of the horizontal recess so that the sliding housing is constrained and prevented from rotating, and
when the sliding housing enters into a rotation operation mode from the closed condition, the pad of the hinge base slides from a lower end of the rotation sliding opening to an upper end of the rotation sliding opening, the guide protrusion of the base swing link simultaneously slides from a lower end of the slanted recess to an upper end of the slanted recess and allows the sliding housing to rotate relative to the main housing, and the constraint tip of the base swing link remains inserted into the constraint recess of the sliding housing during the rotation process so that the sliding housing is not allowed to slide in the longitudinal direction of the main housing.

2. The mechanism as claimed in claim 1, further comprising a vertical sliding spring having a first arm fixed to the main housing or to a component integrated with the main housing and a second arm fixed to the sliding housing or to a component integrated with the sliding housing so that, when the sliding housing is in a closed condition or an opened condition with regard to the main housing, the vertical sliding spring supports the sliding housing to maintain the condition, and, when the sliding housing is slid up or down by external force, the vertical sliding spring is compressed and then extended to provide force for pushing up or pulling down the sliding housing to the limit.

3. The mechanism as claimed in claim 2, wherein the vertical sliding spring is a torsion spring.

4. The mechanism as claimed in claim 1, further comprising a rotation sliding spring having a first arm fixed to the main housing or to a component integrated with the main housing and a second arm fixed to the sliding housing or to a component integrated with the sliding housing so that, when the sliding housing is in a closed condition or a 90°-rotated condition with regard to the main housing, the rotation sliding spring supports the sliding housing to maintain the condition, and, when the sliding housing is being moved by external force to the 90°-rotated condition or the closed condition, the rotation sliding spring is compressed and then extended to provide force for rotating the sliding housing to the limit.

5. The mechanism as claimed in claim 4, wherein the rotation sliding spring is a torsion spring.

6. The mechanism as claimed in claim 1, wherein a distance traveled by the pad of the hinge base in the horizontal direction (x-axis direction) when sliding from the lower end of the rotation sliding opening to the upper end is equal to a distance traveled by the sliding housing in such a manner that a longitudinal center line of the sliding housing is positioned on a transverse center line of the main housing.

7. The mechanism as claimed in claim 1, wherein a distance traveled by the pad of the hinge base in the longitudinal direction (y-axis direction) of the main housing when sliding from the lower end of the rotation sliding opening to the upper end is equal to a distance traveled by the sliding housing in such a manner that an upper surface of the sliding housing is flush with an upper surface of the main housing after the sliding housing has rotated 90°.

8. The mechanism as claimed in claim 1, wherein the rotation sliding opening has a slanted angle and a length corresponding to a distance traveled by the pad of the hinge base in the transverse direction (horizontal direction or x-axis direction) and the longitudinal direction (y-axis direction) of the main housing when the sliding housing rotates 90°.

9. The mechanism as claimed in claim 7, wherein, after rotating 90°, the sliding housing has horizontal symmetry with reference to the main housing, and the upper surface of the sliding housing is flush with the upper surface of the main housing.

10. The mechanism as claimed in claim 1, wherein the slanted recess of the rotation guide recess constrains the guide protrusion of the base swing link while the sliding housing rotates 90° so that the sliding housing is prevented from sliding in the longitudinal direction.

11. The mechanism as claimed in claim 9, wherein the slanted recess extends a predetermined length in a diagonal direction while being curved, and the length and curved trajectory of the slanted recess are determined based on movement trajectories of the main swing link and the base dummy.

12. The mechanism as claimed in claim 1, wherein slots are formed on the pad of the hinge base and the base dummy abutting the pad, respectively, so that an FPCB can extend through to electrically connect the sliding housing to the main housing.

13. The mechanism as claimed in claim 1, wherein the sliding housing has a sliding housing body having a rectangular sink formed on a front surface, and a rectangular sliding plate having a width slightly smaller than a width of the sink, step-shaped guide rails being positioned along both lateral surfaces of the sliding plate, the sliding plate being fixed within the sink to provide sliding recesses elongated between the sliding plate and both lateral walls of the sink.

14. The mechanism as claimed in claim 1, wherein the main housing has a guiding plate, the rotation guide recess being formed on the guiding plate, the rotation sliding opening being formed adjacent to the rotation guide recess, and a main housing body for receiving the guiding plate to be integrally coupled to the guiding plate.

15. A combined sliding and rotation mechanism adapted to a device having a main housing and a sliding housing coupled to face the main housing so that the mechanism supports the sliding housing to conduct sliding and rotation operations with regard to the main housing, the mechanism comprising:
a main housing having a rotation guide recess and a rotation sliding opening positioned in an upper region of a front surface, the rotation guide recess having a horizontal recess extending a short distance in a horizontal direction (x-axis direction) and a slanted recess elongated obliquely and connected to the horizontal recess to communicate with the horizontal recess, the rotation sliding opening being elongated obliquely adjacent to the rotation guide recess, and the main housing having a sink positioned on a rear surface to comprise the rotation sliding opening;
a sliding housing having lateral walls elongated in predetermined positions on a front surface facing the main housing, constraint recesses formed on ends of the lateral walls, and guide rails elongated in a longitudinal direction;
a hinge base having a base plate, holders connected to left and right sides of the base plate and coupled to engage with the guide rails and slide, and a pad and an incision hole positioned on a front surface of the base plate, the pad protruding to be inserted into the rotation sliding opening;
a base swing link having a plate piece rotatably coupled to a rear surface of the base plate of the hinge base and a guide protrusion protruding upright in a predetermined position on the plate piece, the guide protrusion being inserted into the rotation guide recess via the incision hole of the hinge base, an end of the plate piece functioning as a constraint tip inserted into or released from the constraint recess;
a base dummy fixed to the pad of the hinge base from the sink of the main housing across the rotation sliding opening so that the hinge base is fastened in the upper region of the front surface of the main housing;
a main swing link having an end pivotably inserted into a bottom of a sink of the base and an opposite end pivotably inserted into an end of an assembly of the base dummy and the hinge base;
a vertical sliding spring having a first arm fixed to the main housing or to a component integrated with the main housing and a second arm fixed to the sliding housing or to a component integrated with the sliding housing so that, when the sliding housing is in a closed condition or an opened condition with regard to the main housing, the vertical sliding spring supports the sliding housing to maintain the condition, and, when the sliding housing is slid up or down by external force, the vertical sliding spring is compressed and then extended to provide force for pushing up or pulling down the sliding housing to the limit; and
a rotation sliding spring having a first arm fixed to the main housing or to a component integrated with the main housing and a second arm fixed to the sliding housing or to a component integrated with the sliding housing so that, when the sliding housing is in a closed condition or a 90°-rotated condition with regard to the main housing, the rotation sliding spring supports the sliding housing to maintain the condition, and, when the sliding housing is being moved by external force to the 90°-rotated condition or the closed condition, the rotation sliding spring is compressed and then extended to provide force for rotating the sliding housing to the limit.

16. The mechanism as claimed in claim 15, wherein the vertical sliding spring and the rotation sliding spring are torsion springs.

17. The mechanism as claimed in claim 15, wherein, when the sliding housing enters into a sliding operation mode in the longitudinal direction (y-axis direction) of the main housing from a closed condition, the constraint tip of the base swing link escapes from the constraint recess of the sliding housing, and the guide protrusion of the base swing link simultaneously moves from a boundary point between the horizontal recess and the slanted recess of the rotation guide recess to a terminal point of the horizontal recess so that the sliding housing is constrained and prevented from rotating, and
when the sliding housing enters into a rotation operation mode from the closed condition, the pad of the hinge base slides from a lower end of the rotation sliding opening to an upper end of the rotation sliding opening, the guide protrusion of the base swing link simultaneously slides from a lower end of the slanted recess to an upper end of the slanted recess and allows the sliding housing to rotate relative to the main housing, and the constraint tip of the base swing link remains inserted into the constraint recess of the sliding housing during the rotation process so that the sliding housing is not allowed to slide in the longitudinal direction of the main housing.

18. A portable electronic device, such as a portable communication terminal, a game machine, a PMP, a compact computer, a portable electronic appliance, etc., employing the combined sliding and rotation mechanism as claimed in one of claims 1-17 so that a sliding operation mode and a rotation operation mode can be conducted selectively.

19. The portable electronic device as claimed in claim 18, wherein the portable electronic device has a display screen arranged on the sliding housing and keys arranged on the main housing.

20. The portable electronic device as claimed in claim 16, wherein all keys of the portable electronic device are arranged on the main housing only, and the display screen is sized to occupy the majority of the front surface of the sliding housing.
